# EUROPEAN PATENT SPECIFICATION

(11) **EP 3 400 852 B1**
(45) Date of publication and mention of the grant of the patent: **26.02.2020**
(21) Application number: 16741047.1
(22) Date of filing: 03.06.2016
(51) Int. Cl.: A47J 31/06, A47J 31/36, B65D 85/804

(54) **ASSEMBLY, CAPSULE AND METHOD FOR PREPARING INFUSIONS**
ANORDNUNG, KAPSEL UND VERFAHREN ZUR ZUBEREITUNG VON BRÜHGETRÄNKEN
ENSEMBLE, CAPSULE ET PROCÉDÉ DE PRÉPARATION D'INFUSIONS

(30) Priority: 05.01.2016 ES 201630004
(43) Date of publication of application: 14.11.2018
(73) Proprietor: CUP OUT OF THE BOX, S.L., 34200 Venta de Baños (Palencia) (ES)
(72) Inventor: GARCÍA RÍOS, Patricia, 34200 Venta de Baños (Palencia) (ES)
(74) Representative: Curell Suñol S.L.P.
(86) International application number: PCT/ES2016/070417
(87) International publication number: WO 2017/118768

(56) References cited:
- WO-A1-2013/136209
- WO-A2-2014/012779
- WO-A2-2014/012783

## Description

### Field of the invention

The invention relates to a unit for preparing infusions comprising a capsule comprising a cup-shaped main body defining a main axis and having an upper base and an open lower base, a lid for closing said lower base and forming an inner chamber with said main body in which there is contained an infusion product, a perimetrical rim projecting outwardly from said lower base and having an injection side and an extraction side, and a sealing member, provided on said injection side of said rim, and a device for preparing infusions comprising an enclosing member configured to receive said capsule and having a leading sealing edge, said device being configured to prepare an infusion by causing a liquid to pass under pressure through said inner chamber, said unit having a rest position in which said leading sealing edge is remote from said sealing member and an operative position in which said leading sealing edge is compressed against said sealing member to provide fluid tightness during the preparation of said infusion.

The invention likewise relates to a capsule for use in a device for preparing infusions comprising a truncated-cone-shaped enclosing member configured to receive said capsule and having a circular leading sealing edge, said device being configured to prepare an infusion by causing a liquid to pass under pressure through said inner chamber and said leading sealing edge having an inner diameter comprised between 29.8 and 30.4 mm and an outer diameter comprised between 30.6 and 32 mm, said capsule comprising a truncated cone cup-shaped main body defining a main axis and having an upper base and an open lower base, a lid for closing said lower base and forming an inner chamber with said main body in which there is contained an infusion product, a perimetrical rim extending outwardly from said lower base and having an injection side and an extraction side, and a sealing member, provided on said injection side of said rim.

Finally, the invention also to a method for preparing infusions comprising the steps of: inserting a capsule comprising a cup-shaped main body defining a main axis and having an upper base and an open lower base, a lid for closing said lower base and forming an inner chamber with said main body in which there is contained an infusion product, a perimetrical rim projecting outwardly from said lower base and having an injection side and an extraction side, and a sealing member, provided on said injection side of said rim, in a device for preparing infusions comprising an enclosing member configured to receive said capsule and having a leading sealing edge, said device being configured to prepare an infusion by causing a liquid to pass under pressure through said inner chamber, said unit having a rest position in which said leading sealing edge is remote from said sealing member and an operative position in which said leading sealing edge is compressed against said sealing member to provide fluid tightness during the preparation of said infusion.

### State of the art

The preparation of infusions of the type of tea, coffee or the like from units for preparing infusions formed by a device injecting a fluid, preferably hot water, under a pressure of between 1 and 20 bar in a capsule containing one or multiple doses of the infusion to be prepared, of the type described at the beginning is known.

One of the problems that this way of preparing infusions presents consists of it being complicated to achieve correct fluid tightness at the contact point between the enclosing member of the capsule holder of the machine and the rim of the capsule itself. The enclosing member bears with its leading sealing edge on the sealing member of the capsule provided on the rim. Unless good fluid tightness is achieved at this bearing point, fluid losses and a drop in the pressure of the fluid injected in the capsule occur. Consequently, the organoleptic properties of the beverage are directly affected.

Examples of this way of preparing infusions are known from documents such as EP0512470A1, EP2303077A1, WO2014184652A1 or WO2014118812A1, which describe ways of approaching this problem.

In particular, EP2303077A1 discloses a solution in which to achieve the fluid tightness at the contact point between the enclosing member and the rim on which the capsule holder bears, the capsule is provided with a sealing member formed by a plurality of very closely spaced apart concentric annular lips. Thus, the leading sealing edge of the enclosing member bears on the peaks of these lips to guarantee the fluid tightness of the system during the injection of the fluid. Such sealing member having the plurality of lips is directed to minimizing liquid losses should the enclosing member and the capsule be mutually offset. Nevertheless, particularly when the offset has occurred, the loss of a certain amount of liquid is not avoided. Thus, this solution only minimizes the problem.

WO2014184652A1 discloses a sealing member formed through a lip forming a trough in the capsule rim. Under this trough, on the extraction side of the capsule, the rim is provided with a step. When the capsule holder presses against the trough, owing to the step under the sealing member, the lip is deformed inwardly to block the outer surface of the enclosing member. In this case, there is also the risk of the capsule holder itself bearing on the trough in an offset way, such that not all the lip bears against the outer profile of the enclosing member. Also, when the offset is very great, the enclosing member can press the lip and then the desired effect of fluid tightness is not attained.

Finally, WO2014118812A1 discloses a capsule having a sealing member formed by two concentric lips remote from the main body of the capsule. The same as in the case of WO2014184652, there is provided on the extraction side of the capsule rim a step to facilitate the bearing of both ribs against the side walls of the enclosing member when the latter presses against the floor of the trough formed between both ribs. Once again in this case, the problem arises that the enclosing member might not correctly enter in the trough, reproducing the already described problems.

Document WO2013136209A1 discloses a system for making beverages comprising a capsule containing a powdered food substance which can be extracted to make a beverage, and a capsule holder comprising an infeed opening through which the capsule can be inserted, delimited by an annular edge at the top of which there is a projecting annular element and/or respectively an annular seat. The capsule comprises a body comprising a lower wall, a lateral wall and a perimetric edge on which there is an annular groove on whose surface there is a bottom zone and, laterally positioned on opposite sides of the bottom zone, two inner lateral faces, and/or respectively there is an annular tooth on whose surface there is a tip portion and, laterally positioned on opposite sides of the tip portion, two outer lateral faces. The capsule holder and the capsule can adopt a sealed configuration where the projecting annular element, inserted in the annular groove, is in sealed contact with at least one of the inner lateral faces, and/or respectively the annular seat receives inside it the annular tooth and is in sealed contact with at least one of the outer lateral faces.

Document WO2014012783A2 discloses a system for preparing a beverage including a capsule comprising a flange-like rim and a sealing protrusion spaced from the lateral wall of the capsule and extending outwardly of said flange rim and a brewing device comprising a receptacle movable with respect to a receiving plate to provide a closed chamber for housing at least part of the capsule. The protrusion of the capsule has at least one side that is inclined by an angle alpha within the range of 80 to 40 degrees with respect to the plane of said flange rim to have the protrusion contacting the external portion of the edge of said receptacle at least at one location selected from the top and the side of the protrusion.

### Summary of the invention

It is an object of the invention to provide a unit for preparing infusions of the type indicated at the beginning, guaranteeing a good fluid tightness in the point of closure of the enclosing member on the capsule and that this fluid tightness may be effected in a simple, but reliable, way.

This purpose is achieved by a unit for preparing infusions of the type indicated at the beginning, characterized in that said sealing member comprises an annular groove surrounding the main body and which is formed by the side wall of said main body and a remote wall from said main body, said groove narrowing from the injection side towards the extraction side, and in that said groove and said leading sealing edge are configured in such a way that, in the operative position, said leading sealing edge is inserted in said groove and is sealingly compressed simultaneously on said side wall of said main body and said remote wall.

In the first place, it is important to highlight that it is not essential in the invention whether the enclosing member moves in the longitudinal direction or rocks relative to the capsule, but it may also be the other way round. Thus, in the invention, to pass from the rest position to the operative position, it is irrelevant which of these two members moves towards the other.

The narrowing of the annular groove and the shape of the leading sealing edge of the enclosing member are configured and orientated in such a way that, in the operative position, the leading sealing edge of the enclosing member contacts and then compresses the walls delimiting the groove. Thereby, firstly, thanks to one of the walls of the groove being the side wall proper of the capsule, direct guidance is achieved between the leading sealing edge of the enclosing member and the capsule leading the enclosing member always ending to be inserted in the annular groove of the sealing member. This guarantees that the capsule is centered in the enclosing member such that the leading sealing edge of the enclosing member has available two sealing curves on the sealing member. This notably improves the fluid tightness at this point.

Also, unlike other conventional solutions in which guidance is effected through the end of the capsule opposite to the end having the rim, in the invention, the guidance is effected precisely at the leading sealing edge, that is, precisely at the point where it seeks to enter the groove to improve the fluid tightness. Consequently, the assembling between both members is more precise than in the known conventional solutions, in which the guidance is effected from the smaller base of the capsule and, therefore, the risk of offsetting of both parts was very high. In fact, in the conventional solutions, it usually happens that the leading sealing edge of the enclosing member presses simultaneously on several annular protrusions, which allows liquid leak channels to be easily formed.

Thus, with this arrangement, two curves of contact with the walls delimiting the groove are obtained. In the case where a greater deformation occurs, these two sealing curves may be small annular surfaces, but in any case, owing to the reduced area thereof, the pressure exerted by the enclosing member on the walls of the groove increases and the fluid tightness is notably improved at this point. Should any fluid manage to cross through the first contact curve, that is, that of the inner diameter of the enclosing member in contact with the side wall of the capsule, the liquid, under a much lower pressure, will run up against the remote wall of the groove, which hinders the fluid losses in the sealing member. Consequently, the beverage may be prepared under high pressures and the best organoleptic properties thereof may be obtained.

The invention further includes a number of preferred features that are object of the dependent claims and the utility of which will be highlighted hereinafter in the detailed description of an embodiment of the invention.

Particularly preferably, the leading sealing edge has an annular cross section defining an inner diameter and an outer diameter and said groove has a floor defining a floor diameter and said floor diameter is greater than said inner diameter of the enclosing member and smaller than said outer diameter of the enclosing member. Thus, reliable contact with both walls of the groove is guaranteed at all times.

Preferably, the capsule has the shape of a bell-shaped cup, which favours the guidance of the capsule from the time when the leading sealing edge of the enclosing member makes contact with the side wall of the capsule.

In a particularly preferred embodiment, the capsule has the shape of a frustroconical bell-shaped cup allowing more progressive guidance and subsequent centering.

Particularly preferably, the capsule has a guide area on said side wall extending from the floor of said annular groove to at least one third of the height of said capsule, which starts the mutual guiding of capsule and enclosing member at a very early stage during the approach method and increases the correct centering of both parts together.

In a particularly preferred embodiment, the inner wall of said enclosing member and the side wall of said capsule have mating shapes in said guide area, which notably reduces the centering movements at the time prior to closure and minimizes the volume of liquid existing between the capsule and the enclosing member, such that when opening the device at the end of preparing the beverage, there are less losses of fluid.

In another embodiment, said remote wall of said sealing member is formed by a deformable annular protrusion. Also particularly preferably, said rib is plastically deformable to improve even more the fluid tightness. Nevertheless, said deformation may also be elastic.

Preferably, said remote wall comprises a plurality of punctual blind holes penetrating in said sealing member in such a way that said sealing member is deformable under pressure during the preparation of said infusion. Thereby, the sealing member facilitates the occurrence of a plastic deformation of this wall of the sealing member under pressure during the preparation of said infusion, which improves the fluid tightness a little more.

In a preferred embodiment, said groove narrows from said injection side towards said extraction side asymmetrically to optimize on which side of the groove it is desired to obtain a greater fluid tightness. In an alternative embodiment, the groove could be symmetrical.

In another embodiment, the slope angle of said side wall of said main body relative to said main axis is smaller than the slope angle of said remote wall relative to said main axis. Thanks to this, further to working on the fluid tightness, the centering angle of the capsule relative to the machine may be optimized and thereby the progressivity of the centering may be optimized.

Also, with a view to providing a capsule for preparing infusions indicated at the beginning which guarantees good fluid tightness in the closing area of the enclosing member on the capsule and that this fluid tightness may be obtained in a simple, but reliable way, the invention proposes a capsule of the type indicated at the beginning characterized in that the sealing member comprises an annular groove surrounding the main body and which is formed by the side wall of said main body and a remote wall from said main body, said groove narrowing from the injection side towards the extraction side and in that, said side wall in the region of said groove slopes between 14 and 17.5º relative to said main axis, said remote wall slopes between 15 and 45º relative to said main axis, said groove has a maximum height comprised between 0.8 and 3 mm measured from the lowest point of said extraction side and a depth comprised between 0.5 and 1.5 mm measured from said maximum height, to the floor of said groove.

Finally, the invention relates to a method for preparing infusions from a capsule and a device such as those described above which is characterized the sealing member comprises an annular groove surrounding the main body and which is formed by the side wall of said main body and a remote wall from said main body, said groove narrowing from the injection side towards the extraction side, and in that in said operative position, said leading sealing edge is inserted in said groove and is sealingly compressed simultaneously on said side wall of said main body and said remote wall prior to causing said liquid to pass under pressure through said inner chamber.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Further advantages and features of the invention will become apparent from the following description, in which, without any limiting character, preferred embodiments of the invention are disclosed, with reference to the accompanying drawings in which:
Figure 1 is a cross section view along a central plane of a first embodiment of a capsule according to the invention.
Figure 2 is an enlarged detail of the region of the sealing member of the capsule of Figure 1, with the unit for preparing infusions according to the invention in the operative position.
Figure 3 is a partial section view of the unit for preparing infusions according to the invention, during the passage from the rest position to the operative position.
Figure 4 is a partial section view of the unit for preparing infusions according to the invention, in the operative position.
Figure 5 is an enlarged detail of the region of the sealing member of the capsule, with a second embodiment of the unit for preparing infusions according to the invention in the operative position.
Figure 6 is a section view along a central plane of a second embodiment of a capsule according to the invention.
Figure 7 is a cross section view along a central plane of a third embodiment of a capsule according to the invention.
Figure 8 is an enlarged detail of the region of the sealing member of the capsule, with a third embodiment of the unit for preparing infusions according to the invention in the operative position.

### Detailed description of embodiments of the invention

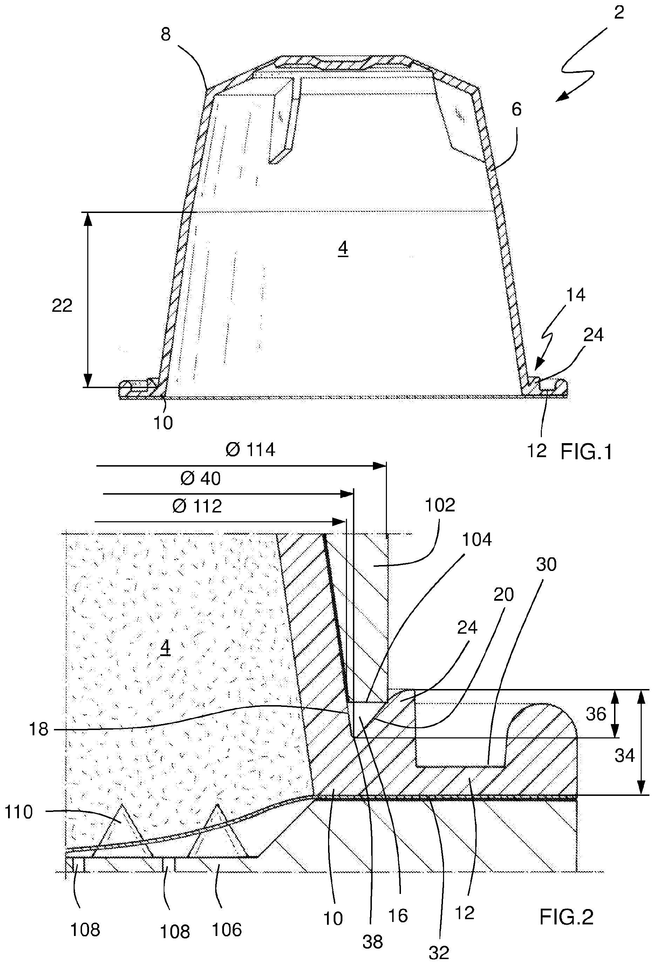

Figure 1 shows a first embodiment of a capsule 2 for use in the unit 1 according to the invention.

The capsule 2 comprises a cup-shaped, preferably bell-shaped and, more preferably, a truncated-cone-shaped or cylindrical main body 6. In principal, the cross section of the capsule will be circular, but it could also have other forms, such as polygonal or the like.

The capsule 2, in this case of truncated cone shape, defines a main axis 28. The truncated cone has an upper base 8 and a lower base 10. In this embodiment, the upper base 8 ends forming a truncated-cone-shaped cap and is closed. Nevertheless, as will be seen in other embodiments, this upper base may be flat and have holes or be open and covered with a sheet. The upper base 8 could also end in the form of a spherical cap or other forms.

On the lower base 10 side, the capsule has a perimetrical rim 12 projecting outwardly from the main body 6. This rim 12 has an injection side 30, corresponding to the side where the main body 6 is and an extraction side 32. It will be seen in Figure 1 that the on the extraction side 32, the capsule 2 has a lid 26 made from a sheet-like material, for closing the lower base 10 and forming an inner chamber 4 with the main body 6, in which there is contained an infusion product. The perimetrical rim 12 of the capsule according to the invention may also project outwardly forming an angle relative to the horizontal in the figures. Nevertheless, the rim 12 usually projects outwardly radially and on the plane perpendicular to the main axis 28 of the capsule 2.

In the preferred embodiment, the main body 6 and the lid 26 are made from materials having barrier properties. In the invention, a material having barrier properties refers to a material which does not let oxygen pass therethrough or allows it to pass at very low levels. Particularly preferably, the barrier materials according to the invention are those having an oxygen transmission rate (OTR) of less than or equal to 0.1 cm³/package per day. In the measurement of the oxygen transmission rate per package refers to a capsule closed with the lid itself. Thanks to this, infusion product is preserved longer and better in the inner chamber 4. Appropriate materials for providing barrier properties are, for example, high density polyethylene (HDPE), aluminium, materials composed of different layers of polymer and metals, cellulose or others. Also preferably, the main body 6 will be made by injection of a polymer or by forming from a sheet of aluminium or heat-forming from a sheet of polymeric material.

In alternative embodiments, to obtain more environmentally sustainable solutions, the invention also contemplates the possibility of using other materials, such as polylactic acid or cellulose for the main body 6 and the lid 26.

Any type of infusion may be produced in the capsule 2 according to the invention, such as coffee, tea, cocoa, mate or the like or also soluble products.

On the injection side 30 of the rim 12, the capsule 2 is provided with a sealing member 14. The sealing member 14 comprises an annular groove 16 surrounding the main body 6. As may be seen in the figures, the groove 16 is formed by the side wall 18 of the main body 6 and a remote wall 20 from the main body 6. This groove 16 narrows from the injection side 30 towards the extraction side with an asymmetrical approximately V shape and extends to a floor 38 of the groove 16. Particularly, the slope angle of the side wall 18 of the main body 6 relative to the main axis 28 is smaller than the slope angle of said remoter wall 20 relative to the same axis. it should also be pointed out that the symmetrical V or straight wall shape as the side wall 18 it is not absolutely necessary. Both walls may be slightly concavely or convexly shaped and would provide the same effect. In any case, in the invention the walls must narrow towards the floor 38 of the groove 16 and not be vertical. Thus, in the operative position, simultaneous contact of the enclosing member 102 against both walls may be guaranteed, by bearing against tight curves all around it. In the case of a greater deformation, these curves could be small annular surfaces on each of the side walls of the groove 16.

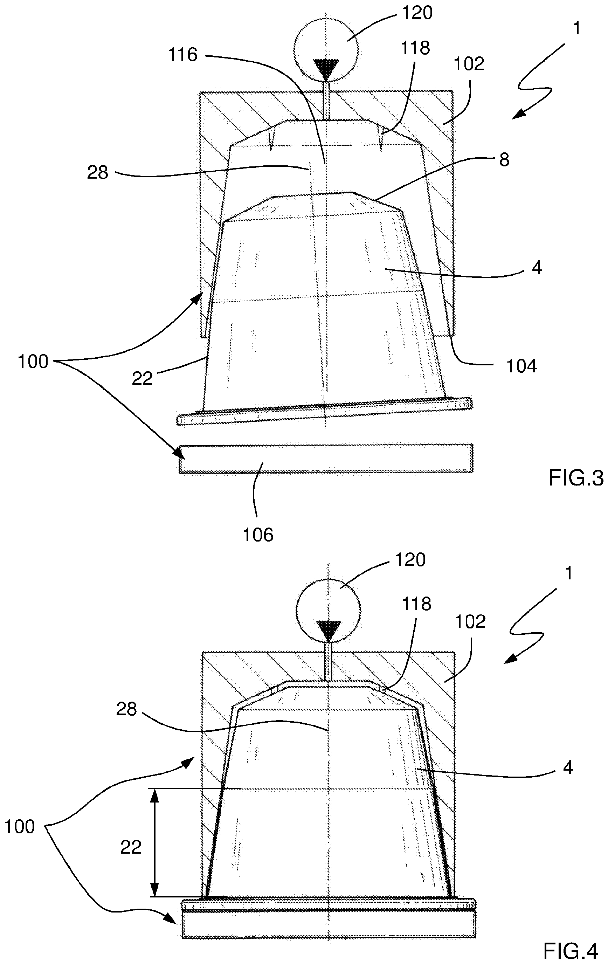

The configuration of the unit 1 for preparing infusions according to the invention is better to be seen in Figures 3 and 4. Further to the capsule 2, the unit 1 comprises a device 100 for preparing infusions, shown very schematically in the figures. The device 100 is a machine for preparing infusions from single-dose capsules, by causing a liquid, such as, for example, water, to pass under pressure at between 1 and 20 bar through the inner chamber 4 of the capsule 2 and which is common in the conventional art.

In the figures there is shown only one enclosing member 102 provided on the injection side of the device 100 and an extraction wall 106 on the extraction side. This enclosing member 102 is configured to receive the capsule 2 in the interior thereof. Opposite to this enclosing member 102, in the device 100 there is the fixed extraction wall 106, provided with liquid passages 108 and perforation means 110, against which the capsule 2 may be opened by the liquid pressure.

It may also be appreciated in the figures that the enclosing member 102 is provided with a leading sealing edge 104.

The unit 1 has a rest position in which the leading sealing edge 104 is remote from the sealing member 14 and an operative position in which the leading sealing edge 104 of the enclosing member 102 is compressed against the sealing member 14.

As explained hereinabove, to obtain optimum results in the preparation of the beverage, it is important to achieve good fluid tightness in the perimetrical contact area between the leading sealing edge 104 and the sealing member 14. Thus, to solve this problem, during the preparation of the beverage, the groove 16 and the leading sealing edge 104 are configured such that, in the operative position, the leading sealing edge 104 is inserted in the groove 16 and is sealedly compressed, simultaneously against the side wall 18 of the main body 6 and the remote wall 20 of the groove 16. This feature is to be seen particularly well in Figure 2. Thanks to this, there are formed two perimetrical curves of contact between the enclosing member 102 and the sealing member 14, notably improving the fluid tightness. It should also be highlighted that another important advantage in the unit according to the invention is provided by the fact that the side wall 8 itself of the capsule 2 forms part of the groove 16, such that a guiding function is obtained in the leading sealing edge 104 making it very hard for offsetting to occur between the enclosing member 102 and the capsule 2. As already explained hereinabove, such offsetting was one of the unresolved problems of the conventional capsules.

This guidance provided by the walls of the groove 16 itself is notably improved when the capsule 2 itself also has a guide area 22 on the side wall 18 extending from the floor of said annular groove 16 to at least one third of the height of said capsule 2. Thereby, the capsule 2 progressively places itself correctly, as shown in Figures 3 and 4.

Also, in this first embodiment of the capsule 2 according to the invention, the inner wall of the enclosing member 102 and the side wall 18 of the capsule 2 have mating shapes in the guide area.

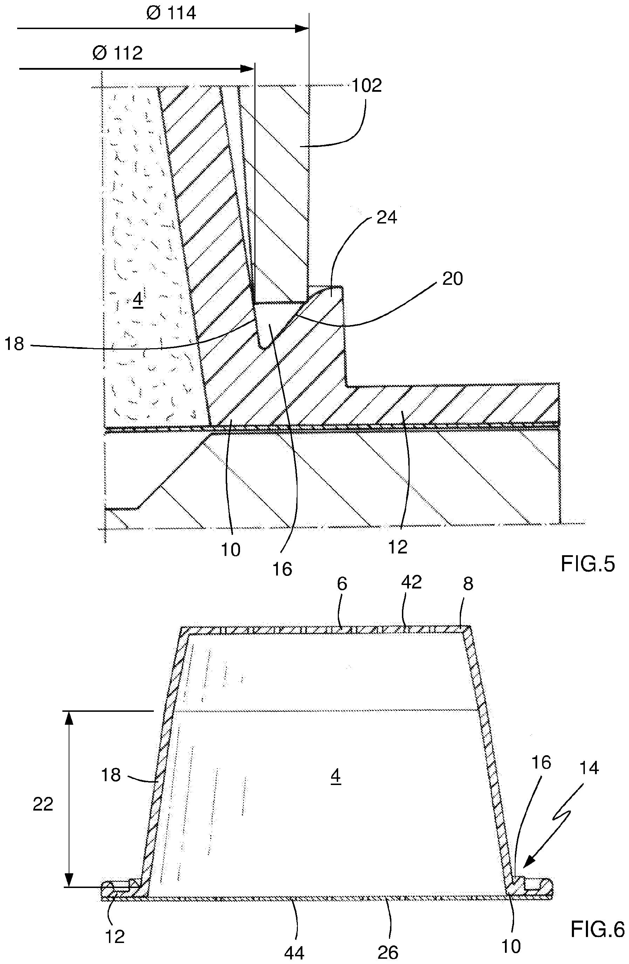

The grove 16 of the capsule 2 according to the invention may be formed in different forms. For example, the rim 12 could be simply a completely flat disc such as for example in Figure 5, and the groove 16 would only be a peripheral indentation of any optimum profile to fulfil the desired function. Nevertheless, in the embodiment shown in the figures, the remote wall 20 of the sealing member 14 is formed between the side wall of the main body 6 and an annular protrusion 24, preferably deformable on being compressed by the enclosing member 102. The deformation may be elastic, but it could also be plastic.

In one particular embodiment providing the technical effect pursued by the invention, the leading sealing edge 104 of the enclosing member 102 has an inner diameter 112 comprised between 29.8 and 30.4 mm and an outer diameter 114 comprised between 30.6 and 32 mm. In turn, in the capsule 2, the side wall 18 in the region of the groove 16 is inclined between 14 and 17.5º relative to the main axis 28, while thee the remote wall 20 is inclined between 15 and 45º relative to the same main axis 28. On the other hand, the groove 16 has a maximum height 34 comprised between 0.8 and 3 mm measured from the lowest point of the extraction side, and a depth 36 comprised between 0.5 and 1.5 mm measured from the maximum height 34 to the floor 38 of the groove 16. As may be seen in Figure 2, the floor 38 of the grove 16 is the lowest point thereof. Thus, for example, one way of measuring the depth 36 if the floor 38 ends in a radius, would be to measure the distance between the maximum height 34 and the point of tangency of the radius marking the floor 38.

The method for preparing infusions according to the invention, from a capsule 2 and a device 100 such as those described in the foregoing paragraphs, is as follows: firstly, the capsule 2 is inserted in the device 100 and more particularly in the capsule holder which is formed by a fixed part and a moving part. In the example shown in Figures 3 and 4, the fixed part is the extraction wall 106 while the moving part is the enclosing member 102. Nevertheless, both parts could have exchanged functions, such that the extraction wall 106 would move and the enclosing member 102 would be static. On the other hand, the device 100 may have a vertical or horizontal capsule holder. That is, when the capsule 2 is put into place, the rim 12 may be in a horizontal or vertical position. Especially if the capsule 2 is placed in a horizontal position, then the extraction wall 106 would include a guide for holding the capsule rim.

The unit 1 according to the invention has a rest position in which the capsule 2 is inserted in the device 100. In this starting position, not shown in the figures, the enclosing member 102 and, more particularly, the leading sealing edge 104 is remote or separated from the sealing member 14 of the capsule 2. From this position, the movement of the enclosing member 102 towards the extraction wall 106 starts. Figure 3 shows an indeterminate moment of this movement. At this moment, the main axis 28 of the capsule 2 is not parallel relative to the axis 116 of the enclosing member 102. Nevertheless, as from when the enclosing member touches the guide area 22, it starts correcting the orientation of the capsule 2 in order progressively to cause the main axis 22 and the axis 116 of the enclosing member 102 to align so that the capsule 2 is centered relative to the enclosing member 102. The offsetting between the capsule 2 and the enclosing member 102 may be caused by a linear movement between the main axis 28 and the axis 116 of the machine, namely, both axes would be parallel, but not coaxial. An angular movement between both axes could occur, or finally, a combination of angular and linear movements.

Precisely, this guiding allows the leading sealing edge 104 of the enclosing member 102, as it approaches the extraction wall 106, to be inserted without difficulty in the groove 16 of the capsule 2 and the unit 1 assumes an operative position in which the leading sealing edge 104 is compressed against the sealing member 14. This provides the fluid tightness, as shown in Figure 4, and the alignment between the enclosing member 102 and the capsule 2 is optimum. It should also be pointed out that the guiding prevents the enclosing member 102 from pressing outside the groove 16, which would cause liquid losses during the preparation of the beverage. In any case, to achieve the optimum fluid tightness, the most important requirement is that the floor diameter 40 of the groove 16 should be greater than the inner diameter 112 of the enclosing member 102 and, in turn, smaller than the outer diameter 114 of the enclosing member 102 and that it should progressively narrow towards the floor 38, which is to be seen clearly in Figure 2. Particularly, in this case, the floor diameter is defined either as the distance between the main axis 28 of the capsule 2 and the point of intersection of the side and remote walls 18, 20, or, if this intersection point is rounded, as the distance between the main axis 28 and the centre of the radius between these two curves. The skilled person will know different ways of measuring this geometry, such as, for example, by a profile projector, or with a similar measuring system.

The enclosing member 102 also has punches 118 at the bottom thereof. These are configured so that, when passing to the operative position, they perforate the upper base 8 of the capsule 2, as shown in Figure 4.

In this situation, the method of infusion can be started. To this end, the pump 120 which injects the fluid under a pressure of between 1 and 20 bar in the inner chamber 4 is activated. Due to this, there is produced an increase in pressure causing the lid to swell and be compressed against the perforation means 110 (see Figure 2) and therefore open passages in the extraction side of the capsule 2 and the infusion flows to the outside through the passages 108 provided in the extraction wall 106. From here on, the infusion is directed to a not shown manifold and is channelled towards the container receiving the infusion.

Hereinafter there are illustrated other embodiments of the unit 1 according to the invention sharing a large portion of the features described in the foregoing paragraphs. Consequently, hereinafter there will be described only the differentiating members, while for the common members reference is made to the description of the first embodiment.

In Figure 5, there is to be seen an embodiment in which the inner wall of the enclosing member 102 is not parallel to the guide area 22. In this case, the guiding is effected only by the leading sealing edge 104 of the enclosing member 102.

In the embodiment of Figure 6, the upper base 8 of the main body 6 has a plurality of first passages 42, while the lid 26 has also a plurality of second passages 44. In this case, the capsule 2 itself would not have a barrier property. To this end, to guarantee a good preservation of the infusion product, the capsule 2 must be packaged in a laminate having this property such as, for example, a laminate composed of aluminium and a polymer such as polythene.

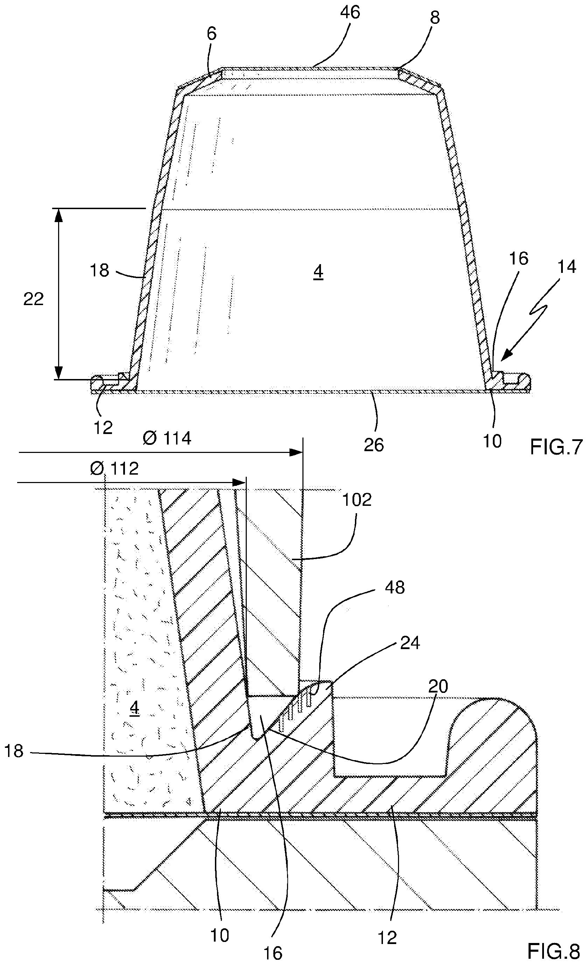

The embodiment of Figure 7 is differentiated by the fact that the upper base 8 is open. Thus, in this case, the opening is covered with an upper laminated covering 46 made from materials such as aluminium or a polymer or combinations thereof. The upper covering 46 may have characteristics similar to those of the lid 26.

In the embodiment of Figure 8, the remote wall 20 of the sealing member 14 comprises a plurality of punctual blind holes 48 penetrating in this wall of the sealing member 14. This embodiment is especially advantageous, since the support surface for the leading sealing edge 104 of the enclosing member 102 is reduced and a greater surface pressure is obtained. This facilitates the occurrence of a plastic deformation of this wall and that, therefore, a better fluid tightness is achieved between the enclosing member 102 and this wall of the sealing member 14.

The embodiments described up to here represent non-limiting examples, such that the man of the art will understand that, beyond the examples shown, within the scope of the invention, multiple combinations among the features claimed and the embodiments shown are possible within the scope of the appended claims.

## Claims

1. A unit for preparing infusions comprising:
[a] a capsule (2) comprising:
[i] a truncated cup-shaped main body (6) defining a main axis (28) and having an upper base (8) and an open lower base (10),
[ii] a lid (26) for closing said lower base (10) and forming an inner chamber (4) with said main body (6) in which there is contained an infusion product,
[iii] a perimetrical rim (12) projecting outwardly from said lower base (10) and having an injection side (30) and an extraction side (32), and
[iv] a sealing member (14), provided on said injection side of said rim (12), and
[b] a device (100) for preparing infusions comprising a truncated-cone-shaped enclosing member (102) configured to receive said capsule (2) and having a circular leading sealing edge (104), said device (100) being configured to prepare an infusion by causing a liquid to pass under pressure through said inner chamber (4), said leading sealing edge (104) having an annular cross section defining an inner diameter (112) and an outer diameter (114),
[c] said unit having a rest position in which said leading sealing edge (104) is remote from said sealing member (14) and an operative position in which said leading sealing edge (104) is compressed against said sealing member (14) to provide fluid tightness during the preparation of said infusion,
[d] said sealing member (14) comprising an annular groove (16) surrounding the main body (6) and which is formed by the side wall (18) of said main body (6) and a remote wall (20) from said main body (6), said groove (16) narrowing from the injection side (30) towards the extraction side (32), said groove (16) having a floor and said remote wall (20) sloping between 15 and 45° relative to said main axis (28)
[e] said groove (16) and said leading sealing edge (104) being configured in such a way that, in the operative position, said leading sealing edge (104) is inserted in said groove (16) and is sealingly compressed simultaneously on said side wall (18) of said main body (6) and said remote wall (20),
**characterised in that**
[f] said leading edge (104) has an inner diameter (112) comprised between 29.8 and 30.4 mm and an outer diameter comprised between 30.6 and 32 mm, **in that**
[g] said floor (38) of said groove (16) defines a floor diameter (40) and said floor diameter (40) is
[i] greater than said inner diameter (112) of the enclosing member (102) and
[ii] smaller than said outer diameter (114) of the enclosing member (102),
[h] said side wall (18) in the region of said groove slopes between 14 and 17.5° relative to said main axis, and **in that**
[i] said groove (16) has a maximum height (34) comprised between 0.8 and 3 mm measured from the lowest point of said extraction side (30) and a depth (36) comprised between 0.5 and 1.5 mm measured from said maximum height, to the floor (38) of said groove (16).

2. The unit according to claim 1, **characterized in that** said capsule (2) has a guide area (22) on said side wall (18) extending from the floor (38) of said annular groove (16) to at least one third of the height of said capsule (2).

3. The unit of claim 2, **characterized in that** the inner wall of said enclosing member (102) and the side wall (18) of said capsule (2) have mating shapes in said guide area (22).

4. The unit according to any of claims 1 to 3, **characterized in that** said remote wall (20) of said sealing member (14) is formed by a deformable annular protrusion (24).

5. The unit according to any of claims 1 to 4, **characterized in that** said remote wall (20) comprises a plurality of punctual blind holes (48) penetrating in said sealing member (14) in such a way that said sealing member (14) is deformable under pressure during the preparation of said infusion.

6. The unit according to any of claims 1 to 5, **characterized in that** said groove (16) narrows from said injection side (30) towards said extraction side (32) asymmetrically.

7. The unit of claim 6, **characterized in that** the slope angle of said side wall (18) of said main body (6) relative to said main axis (28) is greater than the slope angle of said remote wall (20) relative to said main axis (28).

8. A capsule for use in a device (100) for preparing infusions comprising a truncated-cone-shaped enclosing member (102) configured to receive said capsule (2) and having a circular leading sealing edge (104), said leading edge (104) having an annular cross section defining an inner diameter (112) and an outer diameter (114), said device (100) being configured to prepare an infusion by causing a liquid to pass under pressure through said inner chamber (4) and said leading sealing edge (104) having an inner diameter (112) comprised between 29.8 and 30.4 mm and an outer diameter comprised between 30.6 and 32 mm, said capsule (2) comprising
[a] a truncated cone cup-shaped main body (6) defining a main axis (28) and having an upper base (8) and an open lower base (10),
[b] a lid (26) for closing said lower base (10) and forming an inner chamber (4) with said main body (6) in which there is contained an infusion product,
[c] a perimetrical rim (12) extending outwardly from said lower base (10) and having an injection side and an extraction side, and
[d] a sealing member (14), provided on said injection side of said rim (12),
said sealing member (14) comprising an annular groove (16) surrounding the main body (6) and which is formed by the side wall (18) of said main body (6) and a remote wall (20) from said main body (6), said groove (16) narrowing from the injection side (30) towards the extraction side (32), and said groove (16) having a floor (38) defining a floor diameter (40), and said remote wall (20) sloping between 15 and 45° relative to said main axis (28),
**characterised in that**
[e] said floor diameter (40) of said groove (38) is
[i] greater than said inner diameter (112) of the enclosing member (102) and
[ii] smaller than said outer diameter (114) of the enclosing member (102),
[f] said side wall (18) in the region of said groove slopes between 14 and 17.5° relative to said main axis,
[g] said groove (16) has a maximum height (34) comprised between 0.8 and 3 mm measured from the lowest point of said extraction side (30) and a depth (36) comprised between 0.5 and 1.5 mm measured from said maximum height, to the floor (38) of said groove (16).

## Patentansprüche

1. Einheit zum Zubereiten von Aufgüssen, mit:
[a] einer Kapsel (2), mit:
[i] einem kegelstumpfartigen becherförmigen Hauptkörper (6), der eine Hauptachse (28) definiert und eine obere Basis (8) und eine offene untere Basis (10) aufweist,
[ii] einem Deckel (26) zum Verschließen der unteren Basis (10) und eine Innenkammer (4) mit dem Hauptkörper (26) ausbildend, in welcher ein Aufgussprodukt enthalten ist,
[iii] einem Umfangsrand (12), der nach außen von der unteren Basis (10) vorsteht und eine Injektionsseite (30) und eine Extraktionsseite (32) aufweist, und
[iv] einem Dichtelement (14), das an der Injektionsseite des Rands (12) vorgesehen ist, und
[b] einer Vorrichtung (100) zum Zubereiten von Aufgüssen, mit einem kegelstumpfförmigen Umschließungselement (102), das ausgestaltet ist die Kapsel (2) aufzunehmen und eine kreisförmige vordere Dichtkante (104) aufweist, wobei die Vorrichtung (100) ausgestaltet ist einen Aufguss zuzubereiten durch Veranlassen, dass eine Flüssigkeit unter Druck durch die Innenkammer (4) durchgeht, wobei die vordere Dichtkante (104) einen ringförmigen Querschnitt aufweist, der einen Innendurchmesser (112) und einen Außendurchmesser (114) definiert, wobei
[c] die Einheit eine Ruhestellung aufweist, in welcher die vordere Dichtkante (104) entfernt von dem Dichtelement (14) ist, und eine Betriebsstellung, in welcher die vordere Dichtkante (104) gegen das Dichtelement (14) zusammengepresst wird, um Fluiddichtheit während der Zubereitung des Aufgusses vorzusehen,
[d] das Dichtelement (14) eine ringförmige Nut (16) aufweist, die den Hauptkörper (6) umgibt und welche durch die Seitenwand (18) des Hauptkörpers (6) und eine entfernte Wand (20) von dem Hauptkörper (6) ausgebildet ist, wobei sich die Nut (16) von der Injektionsseite (30) in Richtung der Extraktionsseite (32) verengt, die Nut (16) einen Boden (38) aufweist und die entfernte Wand (20) zwischen 15 und 45° relativ zu der Hauptachse (28) geneigt ist,
[e] die Nut (16) und die vordere Kante (104) derart ausgestaltet sind, dass in der Betriebsstellung die vordere Kante (104) in die Nut (16) eingeführt ist und an der Seitenwand (18) des Hauptkörpers (6) und der entfernten Wand (20) gleichzeitig dichtend zusammengepresst wird,
**dadurch gekennzeichnet, dass**
[f] die vordere Kante (104) einen Innendurchmesser (112) aufweist, der zwischen 29,8 und 30,4 mm liegt, und einen Außendurchmesser, der zwischen 30,6 und 32 mm liegt, dadurch, dass
[g] der Boden (38) der Nut (16) einen Bodendurchmesser (40) definiert und der Bodendurchmesser (40) ist
[i] größer als der Innendurchmesser (112) des Umschließungselements (102) und
[ii] kleiner als der Außendurchmesser (114) des Umschließungselements (102),
[h] die Seitenwand (18) in dem Bereich der Nut zwischen 14 und 17,5° relativ zu der Hauptachse geneigt ist, und dadurch, dass
[i] die Nut (16) eine maximale Höhe (34) aufweist, die zwischen 0,8 und 3 mm liegt, gemessen von dem niedrigsten Punkt der Extraktionsseite (30), und eine Tiefe (36), die zwischen 0,5 und 1,5 mm liegt, gemessen von der maximalen Höhe, zu dem Boden (38) der Nut (16).

2. Einheit nach Anspruch 1, **dadurch gekennzeichnet, dass** die Kapsel (2) einen Führungsbereich (22) an der Seitenwand (18) aufweist, der sich von dem Boden (38) der ringförmigen Nut (16) zu zumindest einem Drittel der Höhe der Kapsel (2) erstreckt.

3. Einheit nach Anspruch 2, **dadurch gekennzeichnet, dass** die Innenwand des Umschließungselements (102) und die Seitenwand (18) der Kapsel (2) in dem Führungsbereich (22) zusammenpassende Formen aufweisen.

4. Einheit nach einem der Ansprüche 1 bis 3, **dadurch gekennzeichnet, dass** die entfernte Wand (20) des Dichtelements (14) durch einen verformbaren ringförmigen Vorsprung (24) ausgebildet ist.

5. Einheit nach einem der Ansprüche 1 bis 4, **dadurch gekennzeichnet, dass** die entfernte Wand (20) eine Mehrzahl an punktförmigen Sacklöchern (48) aufweist, die derart in das Dichtelement (14) eindringen, dass das Dichtelement (14) unter Druck während der Zubereitung des Aufgusses verformbar ist.

6. Einheit nach einem der Ansprüche 1 bis 5, **dadurch gekennzeichnet, dass** sich die Nut (16) von der Injektionsseite (30) in Richtung der Extraktionsseite (32) asymmetrisch verengt.

7. Einheit nach Anspruch 6, **dadurch gekennzeichnet, dass** der Neigungswinkel der Seitenwand (18) des Hauptkörpers (6) relativ zu der Hauptachse (28) kleiner ist als der Neigungswinkel der entfernten Wand (20) relativ zu der Hauptachse (28).

8. Kapsel zur Verwendung in einer Vorrichtung (100) zum Zubereiten von Aufgüssen, mit einem kegelstumpfförmigen Umschließungselement (102), das ausgestaltet ist die Kapsel (2) aufzunehmen und eine kreisförmige vordere Dichtkante (104) aufweist, wobei die vordere Dichtkante (104) einen ringförmigen Querschnitt aufweist, der einen Innendurchmesser (112) und einen Außendurchmesser (114) definiert, wobei die Vorrichtung (100) ausgestaltet ist einen Aufguss zuzubereiten durch Veranlassen, dass eine Flüssigkeit unter Druck durch die Innenkammer (4) durchgeht, und die vordere Kante (104) einen Innendurchmesser (112) aufweist, der zwischen 29,8 und 30,4 mm liegt, und einen Außendurchmesser, der zwischen 30,6 und 32 mm liegt, wobei die Kapsel (2) aufweist
[a] einen kegelstumpf-becherförmigen Hauptkörper (6), der eine Hauptachse (28) definiert und eine obere Basis (8) und eine offene untere Basis (10) aufweist,
[b] einen Deckel (26) zum Verschließen der unteren Basis (10) und eine Innenkammer (4) mit dem Hauptkörper (26) ausbildend, in welcher ein Aufgussprodukt enthalten ist,
[c] einen Umfangsrand (12), der sich nach außen von der unteren Basis (10) erstreckt und eine Injektionsseite und eine Extraktionsseite aufweist, und
[d] ein Dichtelement (14), das an der Injektionsseite des Rands (12) vorgesehen ist,
wobei das Dichtelement (14) eine ringförmige Nut (16) aufweist, die den Hauptkörper (6) umgibt und welche durch die Seitenwand (18) des Hauptkörpers (6) und eine entfernte Wand (20) von dem Hauptkörper (6) ausgebildet ist, wobei sich die Nut (16) von der Injektionsseite (30) in Richtung der Extraktionsseite (32) verengt, und die Nut (16) einen Boden (38) aufweist, der einen Bodendurchmesser (40) definiert, und die entfernte Wand (20) zwischen 15 und 45° relativ zu der Hauptachse (28) geneigt ist,
**dadurch gekennzeichnet, dass**
der Bodendurchmesser (40) der Nut (38) ist
[i] größer als der Innendurchmesser (112) des Umschließungselements (102) und
[ii] kleiner als der Außendurchmesser (114) des Umschließungselements (102),
[e] die Seitenwand (18) in dem Bereich der Nut zwischen 14 und 17,5° relativ zu der Hauptachse geneigt ist,
[g] die Nut (16) eine maximale Höhe (34) aufweist, die zwischen 0,8 und 3 mm liegt, gemessen von dem niedrigsten Punkt der Extraktionsseite (30), und eine Tiefe (36), die zwischen 0,5 und 1,5 mm liegt, gemessen von der maximalen Höhe, zu dem Boden (38) der Nut (16).

## Revendications

1. Unité de préparation d'infusions comprenant:
[a] une capsule (2) comprenant:
[i] un corps principal (6) en forme de coupe tronconique définissant un axe principal (28) et ayant une base supérieure (8) et une base inférieure ouverte (10),
[ii] un couvercle (26) pour fermer ladite base inférieure (10) et former une chambre interne (4) avec ledit corps principal (6), dans laquelle se trouve un produit d'infusion,
[iii] un bord périphérique (12) faisant saillie vers l'extérieur depuis ladite base inférieure (10) et ayant un côté d'injection (30) et un côté d'extraction (32), et
[iv] un élément d'étanchéité (14) prévu sur ledit côté d'injection du bord (12), et
[b] un dispositif (100) pour préparer des infusions comprenant un élément d'enveloppe de forme tronconique (102) configuré pour recevoir ladite capsule (2) et ayant un bord d'étanchéité avant circulaire (104), ledit dispositif (100) étant configuré pour préparer une infusion en faisant passer un liquide sous pression à travers ladite chambre interne (4), ledit bord avant d'étanchéité (104) ayant une section transversale annulaire définissant un diamètre intérieur (112) et un diamètre extérieur (114),
[c] ladite unité ayant une position de repos dans laquelle ledit bord avant d'étanchéité (104) est distant dudit élément d'étanchéité (14) et une position de travail pour laquelle ledit bord avant d'étanchéité (104) est comprimé contre ledit élément d'étanchéité (14) pourfournir une étanchéité au fluide lors de la préparation de ladite infusion,
[d] ledit élément d'étanchéité (14) comprend une gorge annulaire (16) entourant le corps principal (6) et qui est formé par la paroi latérale (18) dudit corps principal (6) et une paroi distante (20) dudit corps principal (6), ladite gorge (16) se rétrécissant depuis le côté d'injection (30) vers le côté d'extraction (32), ladite gorge (16) ayant un fond (38) et ladite paroi distante (20) étant inclinée entre 15 et 45° par rapport à l'axe principal (28)
[e] ladite gorge (16) et ledit bord avant (104) sont configurés de telle sorte que, dans la position de travail, ledit bord avant (104) est inséré dans ladite gorge (16) et est comprimé simultanément de manière étanche contre ladite paroi latérale (18) dudit corps principal (6) et ladite paroi distante (20),
**caractérisé en ce que**
[f] ledit bord avant (104) a un diamètre intérieur (112) compris entre 29,8 et 30,4 mm et un diamètre extérieur compris entre 30,6 et 32 mm, **en ce que**
[g] ledit fond (38) de ladite gorge (16) définit un diamètre de fond (40) et ledit diamètre de fond (40) est
[i] supérieur audit diamètre intérieur (112) de l'élément d'enveloppe
(102) et
[ii] inférieur audit diamètre extérieur (114) de l'élément d'enveloppe (102),
[h] ladite paroi latérale (18) dans la région de ladite gorge est inclinée entre 14 et 17,5° par rapport l'axe principal, et **en ce que**
[i] ladite gorge (16) a une hauteur maximale (34) comprise entre 0,8 et 3mm mesurée depuis le point le plus bas dudit côté d'extraction (30) et une profondeur (36) comprise entre 0,5 et 1,5 mm mesurée à partir de la hauteur maximale, par rapport au fond (38) de ladite gorge (16).

2. Unité selon la revendication 1, **caractérisée en ce que** ladite capsule (2) présente une zone de guidage (22) sur ladite paroi latérale (18) s'étendant depuis le fond (38) de ladite gorge annulaire (16) jusqu'à au moins un tiers de la hauteur de ladite capsule (2).

3. Unité selon la revendication 2, **caractérisée en ce que** la paroi interne dudit élément d'enveloppe (102) et la paroi latérale (18) de ladite capsule (2) ont des formes complémentaires dans ladite zone de guidage (22).

4. Unité selon l'une quelconque des revendications 1 à 3, **caractérisée en ce que** ladite paroi distante (20) dudit élément d'étanchéité (14) est formée par une saillie annulaire déformable (24).

5. Unité selon l'une quelconque des revendications 1 à 4, **caractérisée en ce que** ladite paroi distante (20) comprend une pluralité de trous borgnes ponctuels (48) pénétrant dans ledit élément d'étanchéité (14) de manière à déformer sous pression ledit élément d'étanchéité (14) lors de la préparation de ladite infusion.

6. Unité selon l'une quelconque des revendications 1 à 5, **caractérisée en ce que** ladite gorge (16) se rétrécit depuis ledit côté d'injection (30) vers ledit côté d'extraction (32) de manière asymétrique.

7. Unité selon la revendication 6, **caractérisée en ce que** l'angle d'inclinaison de ladite paroi latérale (18) dudit corps principal (6) par rapport audit axe principal (28) est plus petit que l'angle d'inclinaison de ladite paroi distante (20) par rapport audit axe principal (28).

8. Capsule utilisée dans un dispositif (100) pour préparer des infusions, comprenant un élément enveloppant (102) de forme tronconique conçu pour recevoir ladite capsule (2) et ayant un bord d'étanchéité avant circulaire (104), ledit bord avant (104) ayant un section transversale annulaire définissant un diamètre intérieur (112) et un diamètre extérieur (114), ledit dispositif (100) étant configuré pour préparer une infusion en faisant passer sous pression un liquide à travers ladite chambre interne (4) et ledit bord avant (104) ayant un diamètre intérieur (112) compris entre 29,8 et 30,4 mm et un diamètre extérieur compris entre 30,6 et 32 mm, ladite capsule (2) comprenant
[a] un corps principal (6) en forme de coupe tronconique définissant un axe principal (28) et ayant une base supérieure (8) et une base inférieure ouverte (10),
[b] un couvercle (26) pour fermer ladite base inférieure (10) et former une chambre interne (4) avec ledit corps principal (6), dans laquelle est contenu un produit d'infusion,
[c] un rebord périphérique (12) s'étendant vers l'extérieur à partir de ladite base inférieure (10) et ayant un côté d'injection et un côté d'extraction, et
[d] un élément d'étanchéité (14), prévu sur ledit côté d'injection dudit rebord (12),
ledit élément d'étanchéité (14) comprenant une gorge annulaire (16) entourant le corps principal (6) et qui est formée par la paroi latérale (18) dudit corps principal (6) et une paroi distante (20) dudit corps principal (6), ladite gorge (16) se rétrécissant à partir du côté d'injection (30) vers le côté d'extraction (32), et ladite gorge (16) ayant un fond (38) définissant un diamètre de fond (40), et ladite paroi distante (20) étant inclinée entre 15 et 45° par rapport à l'axe principal (28),
**caractérisé en ce que**
ledit diamètre de fond (40) de ladite gorge (38) est
[i] supérieur audit diamètre intérieur (112) de l'élément d'enveloppe (102) et
[ii] inférieur audit diamètre extérieur (114) de l'élément d'enveloppe (102),
[e] ladite paroi latérale (18) dans la région de ladite gorge est inclinée entre 14 et 17,5° par rapport à l'axe principal,
[g] ladite gorge (16) a une hauteur maximale (34) comprise entre 0,8 et 3mm mesurée depuis le point le plus bas du côté d'extraction (30) et une profondeur (36) comprise entre 0,5 et 1,5 mm mesurée à partir de la hauteur maximale, par rapport au fond (38) de ladite gorge (16).
